# FASCICULE DE BREVET EUROPEEN

(11) **EP 0 635 255 B1**
(45) Date de publication et mention de la délivrance du brevet: **28.07.1999**
(21) Numéro de dépôt: 94420211.8
(22) Date de dépôt: 22.07.1994
(51) Int. Cl.: A61J 1/10, C08K 5/07, C08K 5/09, C08K 5/3432

(54) **Procédé de stabilisation et de réduction de la perméabilité au C02 de conteneurs pour solutions de bicarbonate en polychlorure de vinyle plastifié**
Verfahren zum Stabilisieren und Verringern der co2-Durchlässigkeit von Bicarbonatlösungsbehältern aus weichgemachten Polyvinylchlorid
Process for the stabilisation and reduction of co2 permeability of bicarbonate solution containers made from plasticised PVC

(30) Priorité: 23.07.1993 IT TO930553; 08.09.1993 FR 9310891
(43) Date de publication de la demande: 25.01.1995
(73) Titulaire: HOSPAL AG, 4008 Basel (CH)
(72) Inventeur: Galavotti, Francesca, I-41036 Medolla (IT)
(74) Mandataire: Tilloy, Anne-Marie

(56) Documents cités:
- EP-A- 0 005 678
- EP-A- 0 419 794
- EP-A- 0 437 886
- PATENT ABSTRACTS OF JAPAN vol. 11, no. 300 (C-449) 22 Septembre 1987 & JP-A-62 091 548 (ADEKA ARGUS) 27 Avril 1987

## Description

La présente invention se réfère à un procédé pour la réduction de la perméabilité au CO₂ d'éléments et de conteneurs en polychlorure de vinyle plastifié destinés à venir en contact avec des solutions de bicarbonates et la stabilisation de la formulation de polychlorure de vinyle plastifié. En particulier, l'invention se réfère à un procédé pour la réduction de la perméabilité au CO2 de conteneurs pour solutions injectables de bicarbonate de sodium en dialyse réalisés à partir d'une formulation de polychlorure de vinyle plastifié et la stabilisation de cette formulation.

On sait que les conteneurs de PVC (habituellement sous la forme de poches au parois de faible épaisseurs, généralement de l'ordre de 0,3 à 0,5 mm) utilisés pour contenir des solutions de bicarbonate de sodium destinées à la dialyse doivent être stérilisés, la solution étant déjà présente et hermétiquement enfermée dans ces conteneurs, via un procédé de chauffage en autoclave à une température relativement élevée (habituellement comprise entre 116 et 121°C).

A la suite de ce traitement, les poches fabriquées avec les formulations commerciales connues de PVC plastifié, qui contiennent comme stabilisants des stéarates de calcium, peuvent libérer une partie des stéarates dans la solution de bicarbonate; cela peut entraîner une réaction chimique de double échange entre les stéarates de calcium et le bicarbonate de sodium, avec précipitation au sein de la solution de carbonate de calcium, tandis que le stéarate de sodium reste en solution. Cette réaction est favorisée par le chauffage indispensable à la phase de stérilisation ou par la perte possible dans l'atmosphère, également au cours de la période de stockage de la poche stérilisée, d'une partie de l'anhydride carbonique présent dans la solution du fait de la perméabilité de la matière de la poche elle-même favorisée par la faible épaisseurdes parois de la poche, qui est généralement de l'ordre de 0,3 à 0,5 mm. Cette réaction a pour conséquence de rendre la solution de bicarbonate inutilisable lorsque la teneur en carbonate de calcium en suspension est supérieure aux niveaux minimaux autorisés.

Avec les formulations actuelles présentes sur le marché, l'inconvénient décrit se révèle limité, mais s'avère inconstant et imprévisible, et entraîne une influence particulière des paramètres externes ambiants (par exemple, on l'observe plus fréquemment au cours de la période estivale). Cela rend peu fiables les conteneurs actuels et implique des temps de péremption pour la solution (période de stockage des produits au-delà de laquelle la solution ne peut plus être utilisée) très réduite (de l'ordre de quelques mois). En outre, la migration du CO₂ à l'extérieur entraîne une variation du pH de la solution qui, si elle dépasse des limites préétablies, rend la solution inutilisable.

Pour pallier ces inconvénients, la demande de brevet européenne n° 437.274 prévoit d'utiliser dans la solution de bicarbonate un tampon organique qui maintient la pression partielle du CO₂ dans la solution à un niveau supérieur à 66 mm de Hg. Néanmoins, cette solution implique la nécessité de modifier la composition de la solution de dialyse et est de ce fait loin d'être optimale. D'autre part, la pure élimination des stabilisants à base de stéarates de calcium de la formulation de PVC plastifié utilisé pour la fabrication de la poche ne résout pas le problème de la migration du CO₂ à l'extérieur et implique donc l'altération des caractéristiques de la matière de la poche qui peut se révéler difficile à travailler en particulier et est soumise à des jaunissements et à d'autres altérations inacceptables en raison de la formation de doubles liaisons dans les chaînes polymères, par exemple, à la suite des sollicitations thermiques au cours de la phase d'extrusion. De même, l'utilisation de procédés de stérilisation "à froid" (typiquement par des rayonnements pénétrants du type rayons gamma) est une solution difficile à proposer, soit en raison des problèmes de coût, soit en raison du danger que cela implique pour les opérateurs.

L'objet de la présente invention est de résoudre les problèmes décrits via l'utilisation d'une formulation de PVC plastifié convenant à la fabrication de poches et de conteneurs pour solutions de bicarbonate qui ne présente pas de tendance aux altérations au cours de la phase de traitement, ni de tendance à induire la précipitation du carbonate de calcium et la perte d'anhydride carbonique dans la solution de bicarbonate à la suite des traitements de stérilisation à chaud.

L'invention a pour principal objet un procédé pour la réduction de la perméabilité à l'anhydride carbonique d'éléments et de conteneurs destinés à venir en contact avec des solutions de bicarbonates, en particulier pour des conteneurs pour dialyse, réalisés par l'estampage d'une formulation de polychlorure de vinyle plastifié et pour la stabilisation de cette formulation, cette formulation comprenant du PVC, au moins un plastifiant, au moins un lubrifiant-stabilisant et au moins un lubrifiant, procédé caractérisé en ce qu'on utilise, dans cette formulation, une combinaison d'au moins un stabilisant choisi dans le groupe constitué des savons de calcium présentant dans la direction linéaire une chaîne hydrocarbonée de longueur supérieure à 19 atomes de carbone, des dihydropyridines substituées ou non, et des mélanges de ces matières et d'un co-stabilisant constitué d'aroyl-acyl-méthane. Avantageusement, pour la mise en oeuvre du procédé selon l'invention, on n'utilise pas de stéarates de calcium comme agent de stabilisation.

De la sorte, on obtient simultanément un bon effet stabilisant qui permet d'avoir une bonne capacité de traitement de la formation en granulés et une tendance sensiblement réduite à la libération de calcium en présence de solutions de bicarbonates avec, pour conséquence une formation réduite ou nulle (par exemple, dans le cas où l'on utilise comme stabilisant uniquement de la dihydropyridine, substituée ou non, en évitant complètement les savons de calcium) de précipité de carbonate de calcium dans la solution de bicarbonate; dans les deux cas, en outre, la formulation préconisée dans le cadre de l'invention une fois qu'elle est estampée pour former un conteneur démontre une perméabilité réduite au CO₂ dans la mesure où les savons de calcium à longue chaîne, d'une part, et les dihydropyridines, d'autre part, réduisent la mouillabilité interne au CO₂ de la poche ou du conteneur estampé avec la formulation de l'invention: cela implique la formation de bulles d'anhydride carbonique sur les parois du conteneur relativement sphériques, ce qui signifie la réduction sensible de l'interface solide/gaz à travers laquelle peut se faire la perte d'anhydride carbonique hors de la solution vers l'atmosphère extérieure au conteneur.

En particulier, le stabilisant utilisé dans le procédé selon l'invention comprend un mélange de sel de zinc ou de calcium et, alternativement ou conjointement, un savon de calcium et une dihydropyridine substituée ou non; selon une première variante préférée, on utilisera des dihydropyridines disubstituées via de longues chaînes de carboxylates alkyliques, tels que les dialkyldihydropyridine-dicarboxylates et, en particulier, les dicarboxylates de didodécyl-dihydropyridine-dicarboxylates; selon une seconde variante préférée, on utilisera, à titre de sel et de savon de calcium, uniquement le savon de calcium présentant dans la direction linéaire une chaîne hydrocarbonée de longueur supérieure à 19 atomes de carbone, de préférence égale ou supérieure à 22 atomes de carbone; dans ce dernier cas où l'on utilise uniquement des savons de calcium (et donc pas de dihydropyridine) ou dans le cas opposé, le procédé selon l'invention prévoit en outre l'emploi conjoint d'un co-stabilisant constitué d'un aroyl-acyl-méthane.

L'absence du co-stabilisant entraîne en effet une action de stabilisation insuffisante qui engendre des risques de "cuisson" des granulés d'estampage obtenus selon ladite formulation et/ou la nécessité d'augmenter les doses de stabilisant, en particulier, de stabilisant à base de savons de calcium, avec de mauvais résultats consécutifs en termes de cession de calcium aux solutions de bicarbonate. Comme co-stabilisant, on utilise de préférence un produit commercial connu sous le nom de RHODIASTAB (marque déposée) produit et fourni par Rhône-Poulenc.

La formulation utilisée dans le cadre de l'invention répond aux directives des Pharmacopées italienne et européenne pour l'utilisation pour l'estampage de conteneurs, sauf pour le fait de contenir deux additifs non prévus par la Pharmacopée pour le PVC, précisément les dihydropyridines et les aroyl-acyl-méthanes. C'est pour cette raison que la formulation utilisée dans le cadre de l'invention a été soumise non seulement à des essais comparatifs avec d'autres formulations de PVC commerciales pour estampage de conteneurs de solutions de bicarbonates, mais également à une série de tests de libération pour en vérifier la biocompatibilité, tests dont on attendait donc une suite favorable du fait que les additifs utilisés en plus par rapport à ceux prévus par la Pharmacopée étaient de toute façon énumérés dans des listes de produits convenant au contact avec les aliments dressées par la loi italienne (DM 21.03,73 et mises à jour successives).

En particulier, la formulation convenant à la mise en oeuvre de l'invention est obtenue par mélange, extrusion et réduction en granulés prêts à l'estampage et comprend, sur base du pourcentage en poids total de la formulation, 60 à 68% de résine PVC, 25 à 33% d'au moins un plastifiant choisi dans le groupe des di-ou trialkylbenzène di- ou tricarboxylates, 3 à 8% d'au moins un lubrifiant-stabilisant choisi dans le groupe des triglycérides époxydés, 0,4 à 1% d'un stabilisant choisi dans le groupe des sels de calcium et de zinc et des savons de calcium à chaîne linéaire supérieure à 19 atomes de carbone, 0% (zéro pour cent) à 0,2% d'un stabilisant choisi dans le groupe des dihydropyridines substituées ou non et en particulier de dialkyl-dihydropyridine-dicarboxylates, 0,1 à 0,8% au total d'un mélange de lubrifiants constitués d'esters de penta-érythrol, de cires hydrocarbonées ou de dialkylamides d'acides gras, et 0,02 à 0,15% d'un co-stabilisant choisi dans le groupe d'aroyl-acyl-méthanes.

Avantageusement, la formulation comprend en outre au moins un anti-oxydant choisi dans le groupe des alkylhydroxytoluènes et la teneur de cet anti-oxydant, additionnée à celle dudit co-stabilisant, doit alors être comprise entre 0,02 et 0,15% en poids du total de la formulation.

Selon une forme préférée de réalisation de l'invention, on utilisera une formulation comprenant 60 à 68% en poids de résine PVC, 25 à 33% en poids de di-(2-éthylhexyl)phtalate (DOP), 3 à 8% en poids d'huile de soja époxydée, un total compris entre 0,4 et 1,1% en poids d'octanoate de zinc et de béhénate de calcium, un total compris entre 0,2 et 0,8% en poids de pentaérythrol-adipate-oléate, d'huile de paraffine et de diéthylstéaramide, un total compris entre 0,02 et 0,15% en poids de stéaroyl-benzyl-méthane et de butyl hydroxytoluène et, facultativement, 0,1 à 0,2% en poids de dihydropyridine.

D'autres caractéristiques et avantages de l'invention apparaîtront à la lumière de la description suivante de quelques exemples de réalisation qui ne limitent en aucune manière la présente invention.

### EXEMPLE 1

Via un mélangeur à turbine opérant selon la technologie connue du "dry-blend", on prépare et on extrude sous la forme de spaghettis, à partir d'une résine de PVC K80 de la firme EVC, dix formulations de PVC plastifié (toutes comprises dans les limites mentionnées dans le tableau I) en modifiant les pourcentages de stabilisant et de lubrifiant ajoutés; les spaghettis sont alors réduits en granulés d'une granulométrie moyenne de 2 mm. Les granulés sont "stérilisés" par immersion dans une solution aqueuse de bicarbonate de sodium à 1,4% en poids à 121°C pendant 30 minutes et on effectue sur l'éluat des contrôles visuels et on compte les particules à l'aide d'un appareil à blocage de lumière HAIAC-ROICO opérant selon F.U., IXème édition). Les solutions non limpides ou contenant des particules en suspension non visibles à l'oeil nu supérieures aux limites admissibles par les diverses Pharmacopées entraînent la mise au rebut de la formulation. On sélectionne à la fin trois formulations entrant dans les limites mentionnées dans le tableau 2.

**TABLEAU 1**

| COMPOSANTS | TENEUR EN % EN POIDS SUR LE TOTAL |
|---|---|
| Résine PVC | 60 - 68 |
| Plastifiant DOP | 25 - 33 |
| Huile de soja époxydée | 3 - 8 |
| Savons de calcium (C>19) et sels de Ca et Zn | 0 - 1,5 |
| RHODIASTAB et Butylhydroxytoluène | 0,02 - 0,15 |
| Lubrifiants | 0,1 - 0,8 |
| Alkyldihydropyridine | 0 - 0,4 |

**TABLEAU 2**

| COMPOSANTS | TENEUR EN % EN POIDS SUR LE TOTAL |
|---|---|
| Résine PVC | 60 - 68 |
| Plastifiant DOP | 25 - 33 |
| Huile de soja époxydée | 3 - 8 |
| Savons de calcium (C>19) et sels de Ca et Zn | 0,4 - 1 |
| RHODIASTAB et Butylhydroxytoluène | 0,02 - 0,15 |
| Lubrifiants | 0,1 - 0,8 |
| Alkyldihydropyridine | 0 - 0,4 |

### EXEMPLE 2

En opérant comme dans l'exemple 1, on produit trois parties de 300 kg chacune de granulés de PVC plastifié ayant des compositions entrant dans les limites du tableau 2, sauf la partie n° 3, qui a une teneur en RHODIASTAB (stéaroyl-benzoyl-méthane) inférieure à la limite inférieure mentionnée dans le tableau 2 de l'exemple 1. Les granulés sont utilisés dans une installation d'estampage industriel de poches en PVC par extrusion par soufflage de type "blow-molding" pour produire chaque fois environ 300 poches standard. La formulation n° 3 présente de graves problèmes de traitement dus à la "cuisson" des granulés en raison d'une stabilisation insuffisante au cours de la phase d'extrusion. Toujours en opérant comme dans l'exemple 1, on produit en laboratoire diverses parties de formulation similaire à celle de l'exemple 1 en termes de pourcentages, mais en substituant aux composés cités dans l'exemple 1 leurs homologues chimiques, ou des produits divers, mais appartenant à la même famille. On utilise en particulier divers aroyl-acyl-méthanes au lieu de RHODIASTAB, divers alkyl-hydroxytoluènes comme antioxydants, diverses dihydropyridines disubstituées avec des chaînes alkyle et diverses combinaisons de pourcentages de sels de zinc (octanoate de zinc) et de savons de calcium (béhénate de calcium). On répète les essais de l'exemple 1 en obtenant des résultats tous positifs.

### EXEMPLE 3

En opérant comme dans l'exemple 1, on produit une partie de 300 kg de granulés de PVC plastifié pour estampage ayant la formulation citée dans le tableau 3. On obtient à partir de cette partie, en opérant comme dans l'exemple 2, 300 poches standard pour des solutions de bicarbonate destinées à la dialyse, de trois litres chacune. Ces poches sont transférées à une installation industrielle de production conjointement avec une partie de 300 poches identiques obtenues via une formulation commerciale de PVC plastifié (H9) contenant comme stabilisant des stéarates de calcium, que l'on trouve communément dans le commerce (firme MGS) et représentant le standard actuel du marché pour la production de poches en PVC susceptibles de contenir des solutions de bicarbonates pour dialyse.

Les poches sont toutes remplies de solutions de bicarbonate de sodium à 1,4% en poids (qui représente la solution la plus concentrée actuellement en usage et donc celle qui est la plus soumise à des problèmes de précipitation de carbonate de calcium). Les poches sont ensuite soumises à une stérilisation thermiques à l'aide de vapeur saturée dans un autoclave à 118°C pendant 30 minutes (conditions plus sévères que les conditions standard en usage - chauffage à 116 ou 118°C pendant 18 minutes) et enfin soumise à la série de tests décrits dans l'exemple 4, avec les résultats cités dans cet exemple.

**TABLEAU 3**

| COMPOSANTS | TENEUR EN % EN POIDS SUR LE TOTAL |
|---|---|
| Résine PVC | 68 |
| Plastifiant DOP | 25,7 |
| Huile de soja époxydée | 6,85 |
| Béhénate de calcium | 0,4 |
| Octanoate de zinc | 0,4 |
| RHODIASTAB | 0,1 |
| Butylhydroxytoluène | 0,05 |
| Adipate-oléate de pentaérytrol | 0,2 |
| Huile de paraffine | 0,2 |
| Diéthylstéaramide | 0,15 |
| Dihydropyridine | 0,15 |

### EXEMPLE 4

Les poches produites et stérilisées selon l'exemple 3 sont soumises à un vieillissement accéléré par chauffage au four à 70°C pendant 15 jours (conditions susceptibles de simuler un vieillissement en magasin de plusieurs mois) et ensuite soumises aux tests suivants:

### 1. Détermination des contaminants

Un litre de solution extraite d'une poche vieillie est placé dans un ballon à deux cols et, après avoir ajouté une quantité connue de standard interne (chlorobenzène dans de l'eau à 0,50 microgramme), les vapeurs organiques sont absorbées par un piège à charbon actif, ensuite, elles sont désorbées par chauffage et injectées dans un système chromatographique en phase gazeuse pourvu d'un spectrographe de masse (système gm-ms à colonne SE54 25 m, 0-22 mm, 0,5 micromètre). Les résultats, confrontés à ceux du contenu d'une poche PVC de formulation standard (MGS), sont reportés dans le tableau 4.

**TABLEAU 4**

| Composants examinés Nom chimique | MGS Teneur (ppb) | P1 (GT14) Teneur (ppb) |
|---|---|---|
| 1,1 dichloroéthane | 0,17 | 0,08 |
| 1,2 dichloroéthane | 0,13 | 0,15 |
| Trichloréthylène | 0,35 | 0,26 |
| 2 butanone | 3,11 | 1,86 |
| 4 heptanone | 0,43 | |
| 3 heptanone | 1,95 | 1,32 |
| Butanal | | 0,47 |
| 2 butanal 2-méthyle 2 pentanal | | 0,13 |
| Pentanal | 0,28 | 0,31 |
| Hexanal | 2,93 | 3,38 |
| Heptanal | 0,26 | |
| 2 éthylexanal | 0,73 | 0,18 |
| 3 méthyl 1 pentène+butanal | 0,83 | |
| 2 méthyl 1 pentène | | 0,35 |
| 5 méthyl 1 heptène | 0,41 | |
| Benzène | 0,10 | 0,15 |
| Toluène | 0,94 | 1,37 |
| Xylène | | 1,94 |
| Thiofène | 0,18 | |
| Acétate d'éthyle | 0,47 | 0,36 |
| Diéthyl ester d'acide carbonique | 0,13 | |
| 2-éthyl-hexyl-ester d'acide acétique | | 0,32 |
| Ethyl éther de t-butyle | 2,06 | 1,50 |
| Diéthoxy éthane | 0,08 | |
| Tétraméthyle tétrahydrofurane | 0,20 | |

### 2. Comptage particulaire

En opérant comme dans l'exemple 1, on procède au comptage des particules de carbonate de calcium en suspension, rapporté à un ml de solution, en augmentant progressivement les temps de permanence dans la poche. Les résultats, confrontés à ceux du contenu d'une poche PVC de formulation standard (MGS), sont reportés dans le tableau 5.

**TABLEAU 5**

| Type de granulé | Temps réglé | Cycle de stérilisation | Particules (en moyenne 5 échantillons) | | | |
|---|---|---|---|---|---|---|
| | | | 2 micromètres | 5 micromètres | 10 micromètres | 50 micromètres |
| P1 | 2 jours | T = 121°C Fo = 30 | 2.016 | 30 | 15 | 0 |
| | 7 jours | T = 121°C Fo = 30 | 61 | 17 | 4 | 0 |
| | 14 jours | T = 121°C Fo = 30 | | | | |
| | 28 jours | T = 121°C Fo = 30 | | | | |
| MGS | 2 jours | T = 121°C Fo = 30 | 4.109 | 210 | 5 | 0 |
| | 7 jours | T = 121°C Fo = 30 | 1.720 | 171 | 6 | 0 |
| | 14 jours | T = 121°C Fo = 30 | | | | |
| | 28 jours | T = 121°C Fo = 30 | | | | |

### 3. Examen par filtration

Il s'agit de déceler les particules éventuelles qui n'ont pu être décelées par le procédé précédent parce que ces particules ont des dimensions à la limite du visible. Le contenu d'une poche de 3 litres est filtré sur un filtre propre ayant une porosité de 8 micromètres. Le filtre est ensuite examiné au microscope, après filtration, pour le comparer à un filtre vierge, sous lumière incidente et un grossissement de 100. A l'examen, on ne voit pas de différence, sinon l'absence de particules à la limite du visible, qui ont échappé au contrôle précédent.

### 4. Mesure du pH et titrage

La mesure du pH est une mesure de l'équilibre chimique carbonate-bicarbonate; celui-ci, conjointement avec le titrage direct, est une mesure significative de la stabilité de la solution contenue dans la poche, en particulier en ce qui concerne la perméabilité au CO₂ du conteneur primaire (la poche précisément).

Le pH est mesuré sur des solutions extraites de poches stérilisées et vieillies à l'aide d'un pH-mètre étalonné par des solutions tampons à pH 7 et 10; le pH devra être compris entre 7 et 8,5 pour la durée de la vie de la solution.

Le titrage du bicarbonate/carbonate se détermine par analyse potentiométrique, au point d'équivalence, des ions carbonate et bicarbonate par du HC1 0,1 N avec une électrode à l'hydrogène combinée avec un dispositif de titrage METTLER nod. DL70. Les analyses (courbe de titrage) démontrent une perméabilité réduite au CO₂ des poches fabriquées avec la formulation de PVC du tableau 3.

Les poches, après stérilisation, sont examinées pour relever les défauts éventuels (pertes, ruptures, déformations). On ne relève pas de défauts.

Les poches sont ensuite soumises à des essais de résistance à la chute (d'une hauteur de 100 cm contre un plan rigide) et à la suspension selon la norme DIN 58363. On ne relève pas de dommages.

On procède enfin sur la matière de la poche à des essais de qualification biologique (hémolyse selon la norme DIN 58361, partie 4, chapitre 5.3.7.; cytotoxicité et conformité à la Classe VI selon la norme USP XXIIème édition) qui ont tous donné de bons résultats.

Il ressort de ce qui a été exposé ci-dessus que les poches obtenues avec la formulation préconisée dans le cadre de l'invention présentent des caractéristiques technologiques tout à fait compatibles avec leur utilisation pour contenir des solutions dialysantes et comparables avec celles des formulations de PVC plastifié d'usage actuel. Par rapport à ces dernières, on a mis en évidence un meilleur comportement vis-à-vis de la génération de carbonate de calcium en suspension dans la solution et une perméabilité réduite au CO₂.

## Revendications

1. Utilisation d'une formulation comprenant :
- du polychlorure de vinyle;
- au moins un plastifiant;
- au moins un lubrifiant-stabilisant;
- au moins un lubrifiant;
- au moins un stabilisant choisi dans le groupe constitué des savons de calcium présentant, dans la direction linéaire, une chaîne hydrocarbonée d'une longueur supérieure à 19 atomes de' carbone, des dihydropyridines, substituées ou non, et des mélanges de ces substances;
- un aroyl-acyl-méthane à titre de co-stabilisant,
pour la fabrication d'éléments et de conteneurs destinés à venir en contact avec des solutions de bicarbonate et la réduction de la perméabilité à l'anhydride carbonique de ces éléments et conteneurs.

2. Utilisation selon la revendication 1, selon laquelle les savons de calcium présentent, dans la direction linéaire, une chaîne hydrocarbonée de longueur égale ou supérieure à 22 atomes de carbone.

3. Utilisation selon la revendication 1 ou 2, selon laquelle le stabilisant est constitué d'un mélange de sel de zinc ou de calcium et, alternativement ou conjointement, d'un savon de calcium et/ou d'une dihydropyridine, substituée ou non.

4. Utilisation selon la revendication 1, selon laquelle la formulation de polychlorure de vinyle plastifié comprend, en pourcentage sur son poids total : 60 à 68% de polychlorure de vinyle; 25 à 33% d'au moins un plastifiant choisi dans le groupe des di- ou tricarbonates, di- ou trialkyl benzène et di- ou tricarboxylates; 3 à 8% d'au moins un lubrifiant-stabilisant choisi dans le groupe de triglycérides époxydés; 0,4 à 1% d'un stabilisant constitué de savons de calcium à chaîne linéaire supérieure à 19 atomes de carbone et, éventuellement, de sels de calcium et de zinc; 0% (zéro pour cent) à 0,2% d'un stabilisant choisi dans le groupe des dialkyl-dihydropyridine-dicarboxylates; 0,1 à 0,8% au total d'un mélange de lubrifiants constitués d'esters de penta-érythrol, de cires hydrocarbonées et de dialkylamides d'acides gras; et 0,02 à 0,15% d'au moins un co-stabilisant choisi dans le groupe des aroyl-acyl-méthanes.

5. Utilisation selon l'une quelconque des revendications précédentes, selon laquelle la formulation comprend, en outre, un anti-oxydant choisi dans le groupe des alkyl-hydroxytoluènes, la teneur dudit agent anti-oxydant additionnée à celle dudit co-stabilisant étant comprise entre 0,02 et 0,15% en poids sur le total de la formulation.

6. Utilisation selon la revendication 1, selon laquelle la formulation comprend 60 à 68% en poids de polychlorure de vinyle; 25 à 33% en poids de di-(2-éthylhexyl)-phtalate; 3 à 8% en poids d'huile de soja epoxydée; un total compris entre 0,4 et 1,1% en poids d'octanoate de zinc et de béhénate de calcium, un total compris entre 0,2 et 0,8% en poids de penta-erythrol-adipate-oléate, d'huile de paraffine et diéthylstéaramide, un total compris entre 0,02 et 0,15% en poids de stéaroyl-benzoyl-méthane et de butyl hydroxytoluène et, facultativement, 0,1 à 0,2% en poids de dihydropyridine.

## Claims

1. Use of a formulation comprising:
- polyvinylchloride;
- at least one plasticizer;
- at least one lubricant-stabiliser;
- at least one lubricant;
- at least one stabiliser chosen from the group constituted by calcium soaps comprising, in the linear direction, a hydrocarbon chain having a length greater than 19 carbon atoms, substituted or non-substituted dihydropyridines and mixtures of these substances;
- an aroyl-acyl-methane as a co-stabiliser,
for the manufacture of components and containers intended to come into contact with bicarbonate solutions and the reduction of the permeability to carbon dioxide of these components and containers.

2. Use according to Claim 1, according to which the calcium soaps comprise, in the linear direction, a hydrocarbon chain of length equal to or greater than 22 carbon atoms.

3. Use according to Claim 1 or 2, according to which the stabiliser is constituted by a mixture of zinc or calcium salt and, alternately or jointly, by a calcium soap and/or a substituted or non-substituted dihydropyridine.

4. Use according to Claim 1, according to which the formulation of plasticised polyvinylchloride comprises, as a percentage of its total weight: 60 to 68% polyvinylchloride; 25 to 33% of at least one plasticizer chosen from the group of di-or tricarbonates, di- or trialkyl benzene and di- or tricarboxylates; 3 to 8% of at least one lubricant-stabiliser chosen from the group of epoxide triglycerides; 0.4 to 1% of a stabiliser constituted by calcium soaps having a linear chain greater than 19 carbon atoms and, possibly, calcium and zinc salts; 0% (zero percent) to 0.2% of a stabiliser chosen from the group of dialkyl-dihydropiridine-dicarboxylates; 0.1 to 0.8% in total of a mixture of lubricants constituted by penta-erythrol esters, hydrocarbon waxes and dialkylamides of fatty acids; and 0.02 to 0.15% of at least one co-stabiliser chosen from the group of aroyl-acyl-methanes.

5. Use according to one of the preceding Claims, according to which the formulation comprises, furthermore, an antioxidant chosen from the group of alkyl-hydroxytoluenes, the content of said antioxidant agent added to that of said co-stabiliser being comprised between 0.02 and 0.15% by weight of the total of the formulation.

6. Use according to Claim 1, according to which the formulation comprises 60 to 68% by weight polyvinylchloride; 25 to 33% by weight di-(2-ethylhexyl)-phthalate; 3 to 8% by weight epoxide soya oil; a total comprised between 0.4 and 1.1% by weight zinc octanoate and calcium behenate, a total comprised between 0.2 and 0.8% by weight of penta-erythrol-adipate-oleate, paraffin oil and diethylstearamide, a total comprised between 0.02 and 0.15% by weight stearoyl-benzoyl-methane and butyl hydroxytoluene and, optionally, 0.1 to 0.2% by weight dihydropyridine.

## Patentansprüche

1. Verwendung einer Formulierung, enthaltend:
- Polyvinylchlorid;
- wenigstens einen Weichmacher;
- wenigstens einen Gleitmittel-Stabilisator;
- wenigstens ein Gleitmittel;
- wenigstens einen Stabilisator, gewählt in der aus den Kalkseifen, welche in linearer Richtung eine Kohlenwasserstoffkette einer Länge von mehr als 19 Kohlenstoffatomen aufweisen, aus den substituierten oder unsubstituierten Dihydropyridinen und aus den Mischungen dieser Substanzen gebildeten Gruppe;
- ein Aroyl-Acyl-Methan, das als Costabilisator dient,
für die Herstellung von Teilen und Behältern, welche dazu bestimmt sind, mit Lösungen von Hydrogencarbonat in Kontakt zu kommen, und für die Verminderung der Permeabilität dieser Teile und Behälter gegenüber Kohlendioxid.

2. Verwendung entsprechend Anspruch 1, nach der die Kalkseifen in linearer Richtung eine Kohlenwasserstoffkette einer Länge von 22 oder mehr Kohlenstoffatomen aufweisen.

3. Verwendung entsprechend Anspruch 1 oder 2, nach der der Stabilisator aus einer Mischung eines Zink- oder Calciumsalzes und -alternativ oder in Kombination- einer Kalkseife und/oder eines substituierten oder unsubstituierten Dihydropyridins besteht.

4. Verwendung entsprechend Anspruch 1, nach der die Formulierung von weichgemachtem Polyvinylchlorid, bezogen auf ihr Gesamtgewicht, als Anteile enthält: 60 bis 68% Polyvinylchlorid; 25 bis 33% wenigstens eines in der Gruppe aus Di- oder Tricarbonaten, Di- oder Trialkylbenzol und Di- oder Tricarboxylaten gewählten Weichmachers; 3 bis 8% wenigstens eines in der Gruppe der epoxidierten Triglyceride gewählten Gleitmittel-Stabilisators; 0,4 bis 1% eines aus Kalkseifen mit mehr als 19 Kohlenstoffatome langer linearer Kette und gegebenfalls aus Calcium- und Zinksalzen bestehenden Stabilisators; 0% (Null Prozent) bis 0,2% eines in der Gruppe der Dialkyl-Dihydropyridin-Dicarboxylate gewählten Stabilisators; insgesamt 0,1 bis 0,8% einer Mischung von Gleitmitteln, bestehend aus Pentaerythrit-Estern, kohlenwasserstoffhaltigen Wachsen und Fettsäure-Dialkylamiden; und 0,02 bis 0,15% wenigstens eines in der Gruppe der Aroyl-Acyl-Methane gewählten Costabilisators.

5. Verwendung entsprechend einem der vorhergehenden Ansprüche, nach der die Formulierung darüber hinaus ein in der Gruppe der Alkyl-Hydroxytoluole gewähltes Antioxidationsmittel enthält, wobei der Gehalt des genannten Antioxidationsmittels, mit dem des genannten Costabilisators zusammengerechnet, zwischen 0,02 und 0,15 Gew.-%, bezogen auf die gesamte Formulierung, liegt.

6. Verwendung entsprechend Anspruch 1, nach der die Formulierung enthält: 60 bis 68 Gew.-% Polyvinylchlorid; 25 bis 33 Gew.-% Di-(2-ethylhexyl)phtalat; 3 bis 8 Gew.-% epoxidiertes Sojaöl; insgesamt zwischen 0,4 und 1,1 Gew-% Zink-octanoat und Calcium-behenat, insgesamt zwischen 0,2 und 0,8 Gew.-% Pentaerythrit-adipat-oleat, Paraffinöl und N,N-Diethylstearoylamid; insgesamt zwischen 0,02 und 0,15 Gew.-% Stearoyl-benzoyl-methan und Butyl-hydroxytoluol; und wahlweise 0,1 bis 0,2 Gew.-% Dihydropyridin.
